# EUROPÄISCHE PATENTSCHRIFT

(11) **EP 2 901 221 B1**
(45) Veröffentlichungstag und Bekanntmachung des Hinweises auf die Patenterteilung: **22.03.2017**
(21) Anmeldenummer: 13765714.4
(22) Anmeldetag: 19.09.2013
(51) Int. Cl.: G05B 19/401, G05B 19/402, G05B 15/02, B23Q 17/22, B23Q 17/24

(54) **VERFAHREN UND VORRICHTUNG ZUM VERMESSEN EINES IN EINER WERKSTÜCKBEARBEITUNGSMASCHINE AUFGENOMMENEN WERKZEUGS**
METHOD AND DEVICE FOR MEASURING A TOOL RECEIVED IN A WORKPIECE PROCESSING MACHINE
PROCÉDÉ ET DISPOSITIF DE MESURAGE D'UN OUTIL MONTÉ DANS UNE MACHINE D'USINAGE DE PIÈCES

(30) Priorität: 26.09.2012 DE 102012019026
(43) Veröffentlichungstag der Anmeldung: 05.08.2015
(73) Patentinhaber: Blum-Novotest GmbH, 88287 Grünkraut-Gullen (DE)
(72) Erfinder: REISER, Wolfgang, 88267 Vogt (DE); RIEDTER, Bruno, 88250 Weingarten (DE)
(74) Vertreter: Schmidt, Steffen J.
(86) Internationale Anmeldenummer: PCT/EP2013/069426
(87) Internationale Veröffentlichungsnummer: WO 2014/048821

(56) Entgegenhaltungen:
- DE-A1-102007 017 048
- DE-A1-102008 017 349
- US-A1- 2007 162 241
- B Grabowski: "Statistik Vorlesungsmitschrift -Kurzfassung", , 31. Dezember 2005 (2005-12-31), XP055096936, Saarland, Deutschland Gefunden im Internet: URL:http://www.htw-saarland.de/ingwi/fakul taet/personen/profile/melanie.kaspar/skrip t1.pdf [gefunden am 2014-01-16]
- Tu München: "Hinweise zur Beurteilung von Messungen, Messergebnissen und Messunsicherheiten", Technische Universität München, 27. März 2009 (2009-03-27), XP055096934, Gefunden im Internet: URL:http://www.ph.tum.de/studium/praktika/ ap/versuche/ABW.pdf [gefunden am 2014-01-16]

## Beschreibung

### Hintergrund

Hier wird ein Verfahren und Vorrichtung zum Vermessen eines in einer Werkstückbearbeitungsmaschine aufgenommenen Werkzeugs beschrieben.

Die Werkstückbearbeitungsmaschine kann eine (numerisch gesteuerte) Werkzeugmaschine, ein (Mehrachsen-)Bearbeitungszentrum, eine (Mehrachsen-)Fräsmaschine oder dergl. sein. Nachstehend wird für alle diese oder derartigen Maschinen auch der Begriff Werkzeugmaschine verwendet. Eine solche Maschine hat eine Spindel, an der ein Werkzeug oder ein Werkstück montiert ist; die Spindel kann fest positioniert oder zum Beispiel in drei orthogonalen Richtungen X, Y, Z innerhalb eines Arbeitsraums der Maschine bewegt und angetrieben werden.

Das Werkzeug kann durch Werkzeugmaschine in einen Messraum, einen zur Messung festgelegten Bereich, eines berührend oder berührungslos funktionierenden Tasters bewegt werden. Der Taster detektiert die Nähe der Oberfläche beispielsweise mit einer kapazitiven, induktiven oder optischen Einrichtung. Für jedes Merkmal geben Kontakt- und kontaktlose Taster entsprechende Messdaten an eine Steuerung weiter, die ein Computerprogramm enthalten kann. Zusammen mit der Maschinenpositionsinformation ermöglichen die Tastermessdaten, dass die (numerische) Steuerung ein genaues Bild der Abmessungen des Werkzeugs oder Werkstücks ermitteln kann.

In ein Werkzeugmagazin der Werkzeugmaschine eingesetzte Werkzeuge müssen vor ihrer ersten Verwendung in einem Bearbeitungsprozess in Länge und Radius präzise vermessen werden. Die bei Spindeldrehzahl ermittelten Werkzeugdaten werden dabei automatisch unter einer spezifischen Werkzeugnummer in die Werkzeugtabelle der NC-Steuerung eingetragen. Anschließend sind die Werkzeugdaten bei jedem Einsatz dieses Werkzeugs bekannt und für die Bearbeitung verfügbar.

Diese Initialmessung erfolgt meist an einem sauberen und trockenen Werkzeug. Vor dem Einsetzen des Werkzeugs in das Werkzeugmagazin oder nach dem Einwechseln in die Spindel werden die Messstellen mit trockener Pressluft, Spezialknet oder dergl. mechanisch manuell gereinigt. So soll sichergestellt werden, dass die gemessenen Werkzeugdaten den tatsächlichen Abmessungen des Werkzeugs entsprechen. Dies ist notwendig, da bei optischer Messung mit dem Laserstrahl alle an der Werkzeugschneide anhaftenden Fremdpartikel (Späne, Kühlmitteltropfen, Ölfilm, Fasern, etc.) das Messergebnis verfälschen können.

Falls die Werkzeugabmessungen auch vor, während oder nach einem Bearbeitungsprozess erneut auf die Einhaltung einer Verschleißtoleranz überwacht werden, findet die Messung bei nasser, öliger und durch Späne kontaminierter Werkzeugoberfläche statt, was die Genauigkeit der Messung und damit die Prozesssicherheit und - zuverlässigkeit erheblich beeinflussen kann. Die beim Zerspanen entstehenden Partikel (Späne) werden durch folgende Parameter beeinflusst: Materialeigenschaften des Werkzeugs (HSS Werkzeugstahl, Hartmetall mit unterschiedlichen Beschichtungen, PKD, Diamant, etc.); Material und Materialeigenschaften des Werkstücks (Stahl, Messing, Kupfer, Aluminium, etc., spröde, hart, weich, zäh, zäh-hart, etc.); sowie Verarbeitungsparameter (Schnittgeschwindigkeit, Zustelltiefe, Vorschubgeschwindigkeit, Schneidenzahl, etc.).

Um die beim Zerspanen entstehende Verschmutzung an der Werkzeugschneide für die Messung zu eliminieren, werden im Stand der Technik folgende Mess- und Reinigungsverfahren eingesetzt:

### Messung bei sich drehender Spindel:

Durch die am Werkzeug entstehenden Zentrifugalkräfte werden leicht anhaftende Partikel (größere Späne, Kühlmitteltropfen, etc.) abgeschleudert.

### Mehrfachmessung an derselben Messstelle mit Überwachung der Streutoleranz:

Liegen die Einzelmesswerte aufgrund schwankender Kühlmittelfilmdicke oder loser Partikel nicht innerhalb einer zulässigen Streutoleranz, kann automatisch eine Wiederholmessung durchgeführt werden, solange bis die Streutoleranz eingehalten wird.

### Passive Reinigung der Messstelle mittels zusätzlicher Werkzeugreinigungsdüse:

Vor und während des Messvorgangs wird die Werkzeugschneide mit stark gebündelter Druckluft angeblasen, um die Messstelle von leicht anhaftenden gröberen Partikeln zu reinigen. Durch den zusätzlichen Luftstoß m_{L}*v_{L} werden gröbere Späne und Kühlmitteltropfen von der Werkzeugoberfläche weggeblasen. Ein dünner Öl- und Kühlmittelfilm sowie sehr kleine Späne können mit dieser Methode aber nur bedingt beseitigt werden.

### Aktive Reinigung der Messstelle durch fettlösendes Reinigungsmittel und zusätzliche Werkzeugreinigungsdüse:

Vor und während des Messvorgangs wird die Werkzeugschneide wechselweise mit einem fettlösenden Reinigungsmittel angesprüht und danach mit stark gebündelter Druckluft angeblasen, um die Messstelle von klebrig anhaftenden kleineren Partikeln zu reinigen Durch das fettlösende Reinigungsmittel werden zäh-klebrige Bestandteile an der Werkzeugoberfläche angelöst und durch den anschließenden Luftstoß m_{L}*v_{L} (Luftmasse * Luftgeschwindigkeit) weggeblasen. Je nach Fettlösekraft, Menge und Einwirkungszeit des eingesetzten Reinigungsmittels, kann ein dünner klebriger Öl- und Kühlmittelfilm mehr oder weniger (partiell) beseitigt werden. Allerdings muss hierbei das Reinigungsmittel zu der verwendeten Kühlmittelemulsion kompatibel sein. Die zusätzliche eingesetzte Druckluft zerstäubt die Reinigungsflüssigkeit. Dabei können gesundheitsgefährdende Aerosole entstehen. Eine intensiviere aktive Reinigung erhöht den Verbrauch an Reinigungsflüssigkeit und die Messzeit. Kleinste, durch Wärmeeinwirkung fest anhaftende Partikel können so nur bedingt beseitigt werden

### Aktive mechanische Reinigung der Messstelle z.B. mittels bewegter Bürsten:

Vor dem Messvorgang wird das Werkzeug zum Beispiel mit bewegter Bürsten von groben Schmutzpartikeln gereinigt. Die Reinigung kann durch fettlösende Reinigungsmittel unterstützt werden. Auch hier muss das Reinigungsmittel zu der verwendeten Kühlmittelemulsion kompatibel sein. Eine intensiviere aktive Reinigung erhöht den Verbrauch an Reinigungsflüssigkeit und die Messzeit. Kleinste, durch Wärmeeinwirkung fest anhaftende Partikel können so nur bedingt beseitigt werden. Scharfe Schneidkanten können durch die Einwirkung von mechanischen Kräften abgestumpft werden bzw. die Bürsten verschleißen an den scharfen Schneidkanten und erzeugen zusätzliche störende Partikel, die sich in den Spannnuten ansammeln und ablagern können. Insgesamt ist dies eine aufwendige und wenig akzeptierte Lösung, da die Bürsten vor Spanablagerungen geschützt werden müssen. Die Bürsten sind regelmäßig zu warten und instand zu halten.

### Aktive Reinigung der Messstelle mittels Ultraschallbad:

Vor dem Messvorgang wird das Werkzeug in einem Ultraschallbad von Schmutzpartikeln gereinigt. Die Reinigung kann durch fettlösende Reinigungsmittel unterstützt werden. Die Kühlmittelemulsion muss für jeden Einzelfall geprüft werden. Die aktive Reinigung wird durch eine längere Einwirkungszeit erreicht; dies erhöht die Messzeit. Kleinste, durch Wärmeeinwirkung fest anhaftende Partikel können nur bedingt beseitigt werden. Es handelt sich um eine aufwendige und teure Lösung, da das Behältnis mit dem Ultraschallbadmedium vor Späneablagerungen durch Späneflug und Kühlmittel geschützt werden muss. Das Ultraschallbad ist regelmäßig zu warten und instandzuhalten.

Alternativ zu den vorstehend beschriebenen Methoden werden zur Messung und Überwachung der Werkzeuggeometrie auch Kamerasysteme eingesetzt. Ein Vorteil von Kamerasystemen liegt darin, dass sie über mehrere Einzelbilder Momentaufnahmen der Werkzeugschneide aufnehmen können und diese mit einem bekannten abgespeicherten Referenzbild der sauberen Werkzeugschneide vergleichen können, um Abweichungen zwischen Soll- und Ist-Geometrie zu erkennen. Allerdings muss hierbei für jedes Werkzeug / jede Werkzeuggeometrie mittels eines Lerngangs ein Referenzbild aufgenommen und abgespeichert werden. Die Auswertung ist dadurch begrenzt auf die zuvor "gelernten" Werkzeuge. Die Ansteuerung des Kamerasystems und die Auswertung des Kamerabildes erfordert eine eigene Bildverarbeitungsplattform (Rechner plus Softwareauswertung, und eine zusätzliche Schnittstelle zwischen dem Rechner und der numerischen Steuerung ist erforderlich. Das Messobjekt (Werkzeugschneide) muss mit einer geeigneten Lichtquelle ausgeleuchtet werden. Da die optischen Komponenten sehr schmutzempfindlich sind, müssen die Lichtquelle und die Kamera gegen Verschmutzung sowie Beschädigung durch Wasser, Öl und Späne ausreichend geschützt werden. Die sich schnell drehenden Werkzeuge erfordern eine sehr schnelle Bildaufnahme- und Bildauslesegeschwindigkeit. Die Auswertung des Kamerabildes bedarf hoher Rechnerleistung und komplexer Auswertealgorithmen. Die unterschiedlichen Werkzeugdurchmesser erfordern eine flexible Einstellung des Fokusabstandes bzw. eine hohe Tiefenschärfe der Optik. Diese Lösung ist sehr teuer, langsam und sehr schmutzempfindlich. Die erreichbare Messgenauigkeit hängt von vielen Faktoren ab u.a. auch von der optischen Einstellung des Systems (Zoom, Fokusabstand, Bildgröße, Bildausschnitt, Tiefenschärfe, Pixelgröße, etc).

### Technisches Problem

Trotz aktiver oder passiver Reinigung der Werkzeugschneide können beim Messen durch Verschmutzungen (Aufmaß) oder Schneidenverschleiß/-ausbruch (Untermaß) an beliebigen Stellen der zu messenden Werkzeugschneide Abweichungen zur Sollgeometrie auftreten. Eine vollständige Beseitigung von störenden Partikeln an der Werkzeugoberfläche kann durch die beschriebenen Maßnahmen im Betrieb der Werkzeugmaschine nicht durchgehend sichergestellt werden. Bekannte Lösungen sind für hochpräzise Fertigungsprozesse zu langsam, zu aufwendig und/oder zu ungenau.

### Technische Lösung

Um hier Abhilfe zu schaffen, wird zum Vermessen eines in einer Werkstückbearbeitungsmaschine aufgenommenen Werkzeugs ein Verfahren mit folgenden Schritten vorgeschlagen:
Bereitstellen eines berührenden oder berührungslosen Werkzeugabtasters zum Erfassen von Ortsdaten an dem Werkzeug und zum Ausgeben für die Ortsdaten repräsentativer Signale,
Bereitstellen einer Auswerteeinrichtung zum Empfangen und Verarbeiten der Signale und zum Ausgeben einer aus den verarbeiteten Signalen ermittelten Werkzeug-Geometrie;
Erfassen einer Abfolge einer ersten Anzahl Ortsdaten an dem Werkzeug und Ausgeben für diese Ortsdaten repräsentativer Signale an die Auswerteeinrichtung; Verarbeiten der für die erste Anzahl Ortsdaten repräsentativen Signale um eine erste Näherung der Werkzeug-Geometrie zu erhalten;
Vergleichen der ersten Anzahl Ortsdaten mit dieser ersten Näherung der Werkzeug-Geometrie und Ausschließen einer Untermenge der ersten Anzahl Ortsdaten abhängig von einem vorgegebenen Kriterium um eine zweite Anzahl Ortsdaten zu erhalten; Verarbeiten der zweiten Anzahl Ortsdaten um eine zweite Näherung der Werkzeug-Geometrie zu erhalten; und
Ausgeben dieser zweiten Näherung der Werkzeug-Geometrie als für das Werkzeug ermittelte Werkzeug-Geometrie. Diese für das Werkzeug ermittelte Werkzeug-Geometrie kann dann in der numerischen Steuerung weiterverarbeitet werden.

Liegen die Messpunkte auf einer gerade verlaufenden Kontur räumlich dicht beieinander oder werden mehrere Messwerte nacheinander an derselben Stelle aufgezeichnet und schwanken diese Messwerte zwischen einem Minimalwert und Maximalwert hin und her (sägezahnförmiger zeitlicher / räumlicher Messverlauf) kann mit hoher Wahrscheinlichkeit davon ausgegangen werden, dass die erfassten Minimalwerte die reale Schneidenkontur wiedergeben, während die Messwerte außerhalb der Tiefpunkte durch Störungen (Wassertröpfchen, Ölfilm, Späne) entstanden sind. In diesem Fall kann zum Beispiel zunächst als eine erste Näherung der Schneidenverlauf mit den Störungen erfasst werden; Anschließend werden die um einen bestimmten Toleranzbereichswert über dem Minimalwert liegenden Messwerte ausgenommen. Die sich aus den übrigen Messwerten ergebende (zumindest angenäherte) Gerade entspricht der realen Schneidenkante des Werkzeugs.

Liegen die Messpunkte auf einer stetig verlaufenden Kontur innerhalb eines räumlich festgelegten Bereiches, der eine eindeutige Konturform wiedergibt (z.B. auf einer Geraden, Schrägen, Kreisform, Ellipsenform, Tonnenform) kann der gemessene Konturverlauf durch die Berechnung eines Polynoms 1., 2., 3.... Grades an den realen Konturverlauf angenähert werden. Einzelne Ausreißer gehen dabei im Verhältnis zur Gesamtanzahl aller Messpunkte mit einer geringeren Gewichtung in das Ergebnis ein. Ferner kann der Abstand jedes Einzelmesswertes von der berechneten Regressionskurve bestimmt und bei Überschreitung eines Toleranzwertbereichs als Ausreißer markiert werden. Bei einer nachfolgenden Neuberechnung der Regressionskurve werden die markierten Ausreißer zur Berechnung nicht mehr verwendet. Dadurch wird die Abweichung zwischen gemessener und realer Werkzeugkontur minimal. Der Funktionswert des Polynoms an einer fest vorgegebenen Messposition liefert die gesuchte Werkzeuggeometrie ohne Verfälschung durch fehlerhafte Einzelmesswerte.

Als kontaktloser Taster kann zum Beispiel auch ein in die Werkzeugmaschine integriertes Lasersystem rotierende Werkzeuge zu vermessen. Dazu kann das Lasersystem in der Werkzeugmaschine verwendet werden, das hauptsächlich zur Bruchkontrolle eingesetzt wird, aber auch als eigenständiges Vermessungssystem oder auch als zusätzlicher Sensor bei Multisensor-Systemen eingesetzt ist. Dabei können Werkzeuglänge und Werkzeugdurchmesser vermessen sowie Schaft- und Schneidenbrüche erkannt werden. Weiterhin kann die Formkontrolle der Schneide durchgeführt werden, indem Ausbrüche und Abnutzung erfasst werden. Außerdem ist das System in der Lage thermische Ausdehnung der Maschinenachsen zu kompensieren. Durch eine Werkzeugmessung im Arbeitsraum unter Nenndrehzahl können Einspannfehler erkannt und effektive Längen- und Radiuskorrekturwerte ermittelt werden.

An einem Drehwerkzeug ist der Hochpunkt der maßbestimmende Eingriffspunkt des Werkzeugs. Dieser Eingriffspunkt ist durch den Laserstrahl exakt zu treffen, um das richtige Maß zu ermitteln. Durch mehrere Messorte entlang der Werkzeugschneide kann mittels einer Kreisregression der Radius eines in der Seitenansicht kreis(abschnitt)förmigen Werkzeugs und dessen Mittelpunkt errechnet werden. Die so erreichbare Genauigkeit ist erheblich höher als mit einem mechanischen Messtaster. Mit berührungsloser Lasermesstechnik können Werkzeuge praktisch vollständig vermessen werden; sie erlaubt das Erfassen kompletter Werkzeuge. So kann ein Verschleiß an jeder beliebigen Schneidenposition, z.B. bei Drehmeißeln, erkannt werden.

Durch die Erfassung der Werkzeuggeometrie über einen größeren Messbereich (im Gegensatz zu einer einzelnen Punktmessung) kann der Verlauf bzw. die Form der Schneide ähnlich wie mit einer CCD-Kamera erkannt und ausgewertet werden. Dabei ist die Datenauswertung bei einem Bild aus einer CCD-Kamera viel aufwändiger und erfordert eine komplexere Bildverarbeitungssoftware und entsprechende Rechenleistung. Demgegenüber erlaubt die oben definierte zwei- oder mehrschrittige Vorgehensweise auf eine einfache Art, Messausreißer zu erkennen und bei der Auswertung auszublenden. Das Messergebnis kommt so mit geringerem Rechenaufwand und ohne Kameraeinsatz der realen Schneidenkontur des Werkzeugs sehr viel näher als herkömmliche Ansätze.

Als Ortsdaten an dem Werkzeug sind hier Koordinaten verstanden, die an den Werkzeug direkt oder indirekt gemessen werden. Eine direkte Messung kann hierbei eine Messung sein, die unmittelbar (X-, Y-, Z-) Koordinaten liefert. Alternativ dazu kann eine indirekte Messung zum Beispiel ein binäres Signal liefern (z.B. Laserstrahl /nicht/ abgeschattet), wenn gleichzeitig die NC-Steuerung die Spindel der Werkzeugmaschine (in X-, Y-, oder Z-Richtung) verfährt. Dann sind im Moment des binären Signalwechsels (zum Beispiel abgeschatteter zu nicht abgeschatteter Laserstrahl, oder umgekehrt) die Ortskoordinaten der NC-Steuerung der Werkzeugmaschine - zzgl. der Erstreckung des Werkzeugs - als die Ortsdaten an dem Werkzeug zu nehmen. Damit sind die Ortsdaten und die diese repräsentierenden Signale die Koordinaten, welche die Werkzeugkontur einer Werkzeuggeometrie beschreiben.

Als Werkzeuggeometrie ist hier die zu messende Geometrie (Abmessungen und Gestalt des Werkzeugs) verstanden.

Vor dem Erfassen der Ortsdaten an dem Werkzeug sind bei einer Variante die Schritte auszuführen: Ermitteln einer Werkzeugklasse; Ermitteln einer zu messenden Kontur, insbesondere einer Werkzeugkontur; Festlegen einer für die Werkzeugklasse repräsentativen Kenngröße der Werkzeuggeometrie; und/oder Bestimmen einer Abtastortsabfolge an dem Werkzeug in Abhängigkeit der ermittelten Werkzeugklasse.

Als Werkzeugklasse kann ein in der Seitenansicht gerades Werkzeug mit achsparallel verlaufender Werkzeugkontur; ein in der Seitenansicht schräges Werkzeug mit nicht achsparallel verlaufender Werkzeugkontur; ein in der Seitenansicht kreisförmiges Werkzeug; ein in der Seitenansicht ellipsenförmiges Werkzeug; ein in der Seitenansicht tonnenförmiges Werkzeug; oder ein Werkzeug mit in der Seitenansicht beliebiger Werkzeugkontur zu ermitteln sein.

Das vorgegebene Kriterium zum Ausschließen einer Untermenge kann bei einer Variante
(i) ein Maß einer Abweichung der jeweiligen Ortsdaten von dieser ersten Näherung der Werkzeug-Geometrie; oder / und (ii) eine vorgegebene Anzahl am weitesten von dieser ersten Näherung der Werkzeug-Geometrie entfernt liegender Ortsdaten sein.

Das Erfassen der Abfolge der ersten Anzahl Ortsdaten an dem Werkzeug kann Ortsdaten umfassen, deren Abtastorte an dem Werkzeug als jeweils um etwa 10 µm bis etwa 1 mm bezogen auf einen vorgegebenen Abtastort an dem Werkzeug oder entlang einer Abtastrichtung an dem Werkzeug voneinander beabstandet liegend festgelegt werden.

Da die Größe der Störpartikel meist im Mikrometerbereich liegt, kann durch Verschieben der Messposition zum Beispiel um wenige 0,01mm bezogen auf einen vorgegebenen Messort der Einfluss des Störpartikels auf diese Weise zumindest nahezu vollständig beseitigt werden. Durch mehrfaches (wiederholtes) Vermessen der Werkzeuggeometrie an voneinander beabstandeten Messstellen können einzelne Messwerte zwar auf einer Störkontur (Störpartikel) basieren. Die Mehrzahl der Messwerte wird aber auf der realen Werkzeugschneide liegen. Durch die zweistufige Auswertung können die Ausreißer der Messung sowohl in die positive Richtung (Aufmaß, Störpartikel) als auch Ausreißer in die negative Richtung (Untermaß, Schneidenausbruch) erkannt und von der realen Schneidenkontur unterschieden und bei der Ermittlung der Werkzeuggeometrie ausgeschlossen werden. Die Prozesssicherheit und Prozesszuverlässigkeit wird dadurch deutlich erhöht.

Bei einer Variante des Verfahrens werden (i) für ein in der Seitenansicht gerades oder ein in der Seitenansicht schräges Werkzeug die Abtastorte an dem Werkzeug als auf einem Geradenabschnitt liegend festgelegt, (ii) für ein in der Seitenansicht kreisförmiges, ellipsenförmiges, oder tonnenförmiges Werkzeug werden die Abtastorte an dem Werkzeug als auf einem Kreisabschnitt liegend festgelegt werden, oder (iii) für ein in der Seitenansicht beliebig geformtes Werkzeug werden die Abtastorte an dem Werkzeug anhand einer Beschreibungstabelle mit genauen Sollkoordinaten der Werkzeugkontur festgelegt.

Die Dimension des zu untersuchenden Messbereiches, die Anzahl bzw. Dichte der Messpunkte im Messbereich, das Mengenverhältnis von Ausreißern zu realen Messwerten sowie die zulässige Größe der Abweichungen und die Vorgehensweise, um von der ersten Anzahl Ortsdaten an dem Werkzeug, also der ersten Näherung auf die zweite Näherung zu kommen, kann bei Bedarf individuell auf die aktuelle Situation (Werkzeug, Messmethode, Umgebung, etc.) angepasst werden. Als mögliche Vorgehensweisen seien Mittelwertbildung, Minimalwertermittlung, Regressionskurve, etc. genannt.

Wenn für ein in der Seitenansicht gerades oder ein in der Seitenansicht schräges Werkzeug als Abfolge der ersten Anzahl Ortsdaten an dem Werkzeug ein zumindest annähernd sägezahnförmiger Verlauf als erste Näherung der Werkzeug-Geometrie erhalten wird, bilden von einem Werkzeug-Ursprung weiter entfernte Ortsdaten die auszuschließende Untermenge.

Für ein in der Seitenansicht kreisförmiges oder tonnenförmiges Werkzeug kann in einer Variante die erste Näherung der Werkzeug-Geometrie durch eine erste Kreisregression ermittelt werden, die einen ersten Werkzeugmittelpunkt und einen ersten Werkzeugradius liefert. Die erste Anzahl Ortsdaten wird mit dieser ersten Näherung der Werkzeug-Geometrie verglichen. Eine Untermenge der ersten Anzahl Ortsdaten wird abhängig von einem vorgegebenen Kriterium ausgeschlossen, um eine zweite Anzahl Ortsdaten zu erhalten. Die zweite Anzahl Ortsdaten wird mittels einer zweiten Kreisregression verarbeitet, welche einen zweiten Werkzeugmittelpunkt und einen zweiten Werkzeugradius als die zweite Näherung der Werkzeug-Geometrie liefert. Diese zweite Näherung der Werkzeug-Geometrie wird als für das in der Seitenansicht kreisförmige oder tonnenförmige Werkzeug ermittelte Werkzeug-Geometrie ausgegeben und entsprechend in der numerischen Steuerung weiter verarbeitet.

Eine andere Variante des Verfahrens hat folgende Schritte:
Überprüfen, ob die Ortsdaten an dem Werkzeug eine einer Werkzeugklasse entsprechende Form des Werkzeugs zumindest näherungsweise wiedergeben; und wenn dies der Fall ist,
Annähern des gemessenen Konturverlauf an den realen Konturverlauf mittels eines zweistufigen Näherungsverfahrens durch Berechnen einer der Form des Werkzeugs dieser Werkzeugklasse entsprechenden geometrischen Funktion, wobei Ausreißerwerte im Verhältnis zur Gesamtanzahl aller erfassten Ortsdaten an dem Werkzeug zumindest teilweise eliminiert werden oder mit einer geringeren Gewichtung in das Ergebnis eingehen, oder der Abstand jedes Einzelmesswertes von einer berechneten Regressionskurve wird bestimmt und bei Überschreitung einer Toleranz als Ausreißerwerte markiert und bei einer nachfolgenden Neuberechnung der Regressionskurve die markierten Ausreißer zur Berechnung nicht mehr verwendet werden.

Dabei können die Schritte ausgeführt werden:
Schrittweises mehrfaches Verschieben der momentanen Messposition um wenige 0,01mm bezogen auf eine vorgegebene erste Messposition; und jeweiliges Erfassen der Abfolge der ersten Anzahl Ortsdaten an dem Werkzeug an der momentanen Messposition;
Ausführen einer Plausibilitätsprüfung nach Mittelwert, Minimalwerten, Regressionskurve, um mögliche Ausreißerwerte sowohl in positiver Richtung als auch in negativer Richtung zu erkennen und von einer realen Werkzeugkontur zu unterscheiden und bei der Berechnung der Werkzeuggeometrie auszufiltern.

Dieses Verfahren kann an (i) eine Dimension eines zu untersuchenden Messbereiches, (ii) eine Anzahl oder eine Dichte von Messpunkten im Messbereich, (iii) das Mengenverhältnis von Ausreißerwerten zu weiterverwendeten Messwerten, (iv) ein zulässiges Maß an Abweichungen, und (v) eine anzuwendende mathematische Filterfunktion angepasst werden.

### Kurzbeschreibung der Zeichnung

Weitere Ziele, Merkmale, Vorteile und Anwendungsmöglichkeiten ergeben sich aus der nachfolgenden Beschreibung einiger Ausführungsbeispiele und zugehöriger Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen.
Fig. 1 zeigt ein Flussdiagramm einer hier vorgestellten Verfahrensvariante.
Fig. 2 zeigt schematisch eine Werkzeugmaschine, die mit einer Maschinensteuerung gekoppelt ist, welche dazu eingerichtet ist, von einer Lasermessstrecke Signale zu empfangen.
In Fig. 3 sind Messdaten an einem in der Seitenansicht schrägen Werkzeug und deren zweistufige Verarbeitung veranschaulicht.
In Fig. 4 sind Messdaten an einem in der Seitenansicht kreisrunden Werkzeug und deren zweistufige Verarbeitung veranschaulicht.

### Detaillierte Beschreibung einiger Ausführungsvarianten

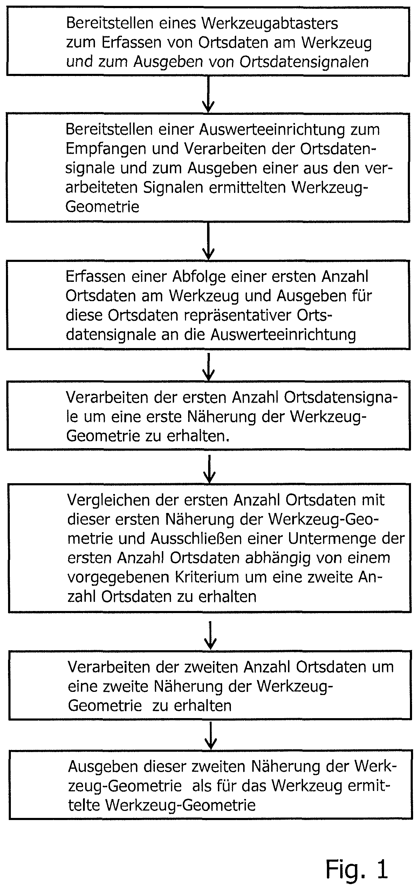

Fig. 1 zeigt ein Flussdiagramm einer hier vorgestellten Verfahrensvariante. Hierbei wird in einer ersten Näherung aus allen gemessenen Daten eine Werkzeug-Geometrie ermittelt. Anschließend werden die gemessenen Daten reduziert, indem solche Daten aus der weiteren Verarbeitung ausgeschlossen werden, die ein bestimmtes Kriterium in Bezug auf die erste Näherung der Werkzeug-Geometrie nicht erfüllen. Aus dem reduzierten Satz an Daten wird dann eine zweite Näherung der Werkzeug-Geometrie ermittelt und als die verbesserte Näherung der Werkzeug-Geometrie ausgegeben.

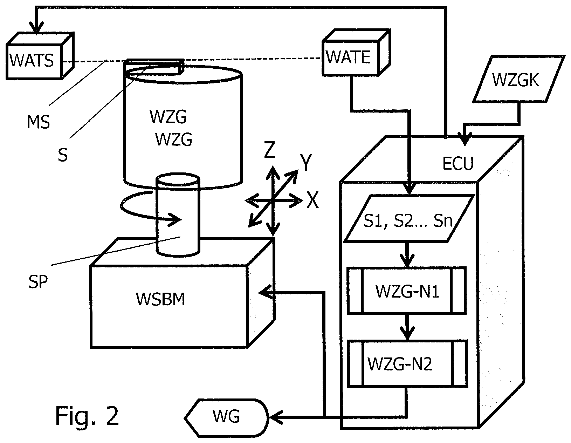

Fig. 2 der Zeichnung zeigt ein Werkzeug WZG, das an einer Spindel SP einer Werkzeugmaschine WSBM eingerichtet ist. In dieser Variante kann sich die Spindel SP in X-, Y- und Z-Richtungen unter der Wirkung von nicht im einzelnen gezeigten X-, Y- und Z-Antrieben bewegen, die durch eine Auswerteeinrichtung ECU in Gestalt einer numerischen Maschinensteuerung gesteuert werden. Das Werkzeug WZG ist in dieser Variante ein Schneidwerkzeug mit einer in der Seitenansicht geraden Schneide S. Es sind aber auch andere Werkzeug- oder Schneidengeometrien möglich.

Anstelle des Werkzeugs kann in der Spindel auch ein Werkstück eingespannt sein, dessen Geometrie - in vergleichbarer Weise wie bei einem Werkzeug - in einer ersten Näherung aus allen gemessenen Daten eine Werkstück-Geometrie ermittelt wird. Anschließend werden die gemessenen Daten reduziert, indem solche Daten aus der weiteren Verarbeitung ausgeschlossen werden, die ein bestimmtes Kriterium in Bezug auf die erste Näherung der Werkstück-Geometrie nicht erfüllen. Aus dem reduzierten Satz an Daten wird dann eine zweite Näherung der Werkstück-Geometrie ermittelt und als die verbesserte Näherung der Werkstück-Geometrie ausgegeben. Nachstehend wird lediglich die Vorgehensweise / die Anordnung für eine Messung der und Näherung der Werkzeug-Geometrie beschrieben; es sei jedoch verstanden, dass dies in analoger Weise auch für Werkstücke gilt.

Der Werkzeugmaschine WSBM ist ein berührungslos messender Werkzeugabtaster WATS, WATE in Gestalt einer Lasermessstrecke mit einem Laserstrahlsender und einem Laserstrahlempfänger zugeordnet. Einzelheiten einer solchen Lasermessstrecke können zum Beispiel der DE 102008017349 A1, "Messsystem zur berührungslosen Messung an Werkzeugen" der Blum-Novotest GmbH, 88287 Grünkraut, DE entnommen werden. Ein solches Messsystem dient zur Messung an Werkzeugen in einer Werkzeugmaschine mit einer Lichtschrankenanordnung zur Positionsbestimmung eines Werkzeuges oder zur Bestimmung der längsten Schneide eines rotierenden Werkzeuges in der Werkzeugmaschine. Das Messsystem kann eine Pneumatiksteuerung haben um in dem Messsystem Druckluft für verschiedene Funktionen bereitzustellen und mindestens eine elektronische Steuerung zum Betreiben der Lichtschrankenanordnung, zum Empfangen von Messsignalen von der Lichtschrankenanordnung und zum Abgeben von Messsignalen in einem Signalübertragungsmedium an die Maschinensteuerung, sowie zum Bereitstellen von Steuersignalen für die Pneumatiksteuerung.

Dieses Messsystem ist bei der spanabhebenden oder Material abtragenden Bearbeitung (z. B. Fräsen, Drehen, Schleifen, Hobeln, Bohren, Senken, Reiben, Erodieren und dergl.), auch in kombinierten Dreh-/Fräsmaschinen oder Fräs-/Drehmaschinen mit stehenden oder sich drehenden Werkzeugen einzusetzen. Zur Positionsbestimmung eines Werkzeuges oder zur Bestimmung der längsten Schneide eines rotierenden Werkzeuges in Werkzeugmaschinen kann eine Lichtschranke und insbesondere eine Laserlichtschranke verwendet werden. Eine mögliche Vorgehensweise ist dabei, das Werkzeug so in einem (Laserlicht-)Messstrahl zu positionieren, dass dessen Strahlengang vom Werkzeug unterbrochen wird. Anschließend wird das Werkzeug relativ zu dem Messstrahl von diesem weg bewegt bis zu einer Position, in welcher der Strahlengang des Messstrahls vom Werkzeug (gerade) nicht mehr unterbrochen wird.

Der Werkzeugabtaster WATS, WATE ist somit dazu eingerichtet, einen die Schneide abtastenden Messstrahl MS auszusenden und zu empfangen, sowie entsprechende Signale S1, S2, ... Sn auszugeben, welche angeben, ob der Messstrahl MS von der Schneide S (teilwiese) unterbrochen wird, oder nicht. Diese Signale sind somit repräsentativ für Orte, entlang deren die Kante der Schneide S des Werkzeugs WZG sich erstreckt.

Die Auswerteeinrichtung ECU ist dazu eingerichtet und programmiert, diese Signale S1, S2, ... Sn zu empfangen und zu verarbeiten, um als erstes (Zwischen-)Ergebnis aus den verarbeiteten Signalen eine erste Näherung WZG-N1 der so ermittelten Werkzeug-Geometrie zu erhalten.

Die Auswerteeinrichtung ECU ist weiter dazu eingerichtet und programmiert, die erste Anzahl Ortsdaten mit dieser ersten Näherung der Werkzeug-Geometrie WZG-N1 zu vergleichen und eine Untermenge der ersten Anzahl Ortsdaten abhängig von einem vorgegebenen Kriterium auszuschließen. Auf diese Weise wird eine zweite (geringere) Anzahl Ortsdaten erhalten.

Die Auswerteeinrichtung ECU ist weiter dazu eingerichtet und programmiert, die zweite Anzahl Ortsdaten zu verarbeiten um eine zweite, bessere Näherung der Werkzeug-Geometrie WZG-N2 zu erhalten.

Die Auswerteeinrichtung ECU ist schließlich dazu eingerichtet und programmiert, diese zweite Näherung der Werkzeug-Geometrie WZG-N2 als für das Werkzeug WZG ermittelte Werkzeug-Geometrie WG auszugeben.

In einer Variante kann die Auswerteeinrichtung ECU dazu eingerichtet und programmiert sein, vor dem Erfassen der Ortsdaten an dem Werkzeug WZG zunächst eine entsprechende, das Werkzeug kennzeichnende Werkzeugklasse WZGK zu ermitteln. Hierunter kann zum Beispiel ein in der Seitenansicht gerades Werkzeug mit achsparallel verlaufender Werkzeugkontur, ein in der Seitenansicht schräges Werkzeug mit nicht achsparallel verlaufender Werkzeugkontur, ein in der Seitenansicht kreisförmiges Werkzeug, ein in der Seitenansicht ellipsenförmiges Werkzeug, ein in der Seitenansicht tonnenförmiges Werkzeug, oder ein Werkzeug mit in der Seitenansicht beliebiger Werkzeugkontur verstanden sein.

Die Auswerteeinrichtung ECU ist in diesem Fall dazu eingerichtet und programmiert, aus der das Werkzeug kennzeichnenden Werkzeugklasse WZGK in einem nächsten Schritt eine zu messende Kontur, insbesondere eine Werkzeugkontur zu ermitteln (gerade Linie, schräge Linie, Kreis, Ellipse, Tonne, Freiform, etc.). Die Auswerteeinrichtung ECU ist weiterhin dazu eingerichtet und programmiert, eine für die Werkzeugklasse WZGK repräsentative Kenngröße der Werkzeuggeometrie festzulegen (zum Beispiel Parameter a, b der Geradengleichung y = a*x +b, oder die Parameter der Ellipsengleichung
(((xᵢ-x₀)*cosα +(yᵢ-y₀)*sinα))/a)²+(((-(xᵢ-x₀)*sinα +(yᵢ-y₀)cosα))/b)² -1 = 0; Dabei ist a der Drehwinkel, um den die Ellipse gegenüber der Normallage geneigt ist, und a bzw. b bezeichnen die große bzw. die kleine Halbachse.

Schließlich ist die Auswerteeinrichtung ECU in diesem Fall dazu eingerichtet und programmiert eine Abtastortsabfolge an dem Werkzeug WZG in Abhängigkeit der ermittelten Werkzeugklasse zu bestimmen. Hierbei wird zum Beispiel festgelegt, dass für ein Werkzeug mit schräger Schneide zehn Messorte anzufahren sind, die jeweils 0,01 mm voneinander beabstandet sind und der erste Messort etwa 0,5 mm vom äußeren Rand des Werkzeugs nach innen liegt.

Die Auswerteeinrichtung ECU kann des Weiteren dazu eingerichtet und programmiert sein, als das vorgegebene Kriterium zum Ausschließen einer Untermenge ein Maß einer Abweichung der jeweiligen Ortsdaten von dieser ersten Näherung der Werkzeug-Geometrie festzulegen. Wenn also zum Beispiel eine gerade Schneide zu vermessen ist, werden solche Ortsdaten ausgeschlossen, die mehr als 0,004 mm über dem kleinsten Messwert liegen. Alternativ dazu kann auch eine vorgegebene Anzahl, zum Beispiel 30% der Messwerte, der am weitesten von der ersten Näherung der Werkzeug-Geometrie entfernt liegenden Ortsdaten ausgeschlossen werden. Bei 10 Messwerten werden also zum Beispiel die drei größten Werte ausgeschlossen.

Das Erfassen der Abfolge der ersten Anzahl Ortsdaten an dem Werkzeug erfolgt zum Beispiel in der Weise, dass Ortsdaten erfasst werden, deren Abtastorte an dem Werkzeug WZG als jeweils um etwa 10 µm bis etwa 1 mm bezogen auf einen vorgegebenen Abtastort (zum Beispiel 5 mm vom Rand des Werkzeugs nach innen versetzt) an dem Werkzeug WZG oder entlang einer Abtastrichtung an dem Werkzeug WZG voneinander beabstandet liegend festgelegt werden.

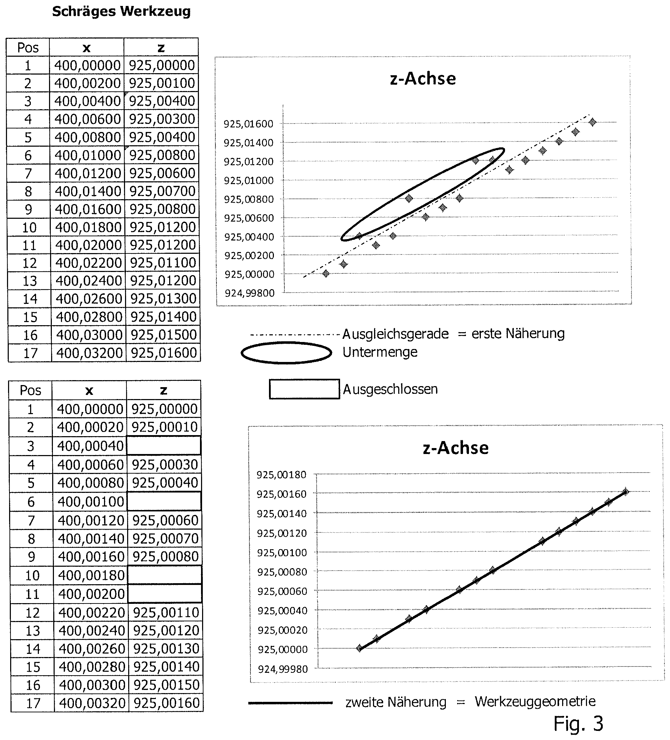

In Fig. 3 ist schematisch veranschaulicht, wie bei einem in der Seitenansicht schrägen Werkzeug vorzugehen ist. Zunächst werden die Abtastorte an dem Werkzeug als auf einem schrägen Geradenabschnitt liegend festgelegt. Dann wird in diesem Beispiel an 17 Messpositionen abgetastet und die Ortsdaten erfasst. Für diese 17 Ortsdaten wird als erste Näherung eine Näherungsgerade ermittelt. Die 4 am weitesten von dieser ersten Näherungsgeraden liegenden Ortsdaten (in diesem Beispiel Nr. 3, Nr. 6. Nr. 10, Nr. 11) werden ausgeschlossen. Für die übrigen Ortsdaten wird eine zweite Näherungsgerade ermittelt und als Werkzeug-Geometrie ausgegeben.

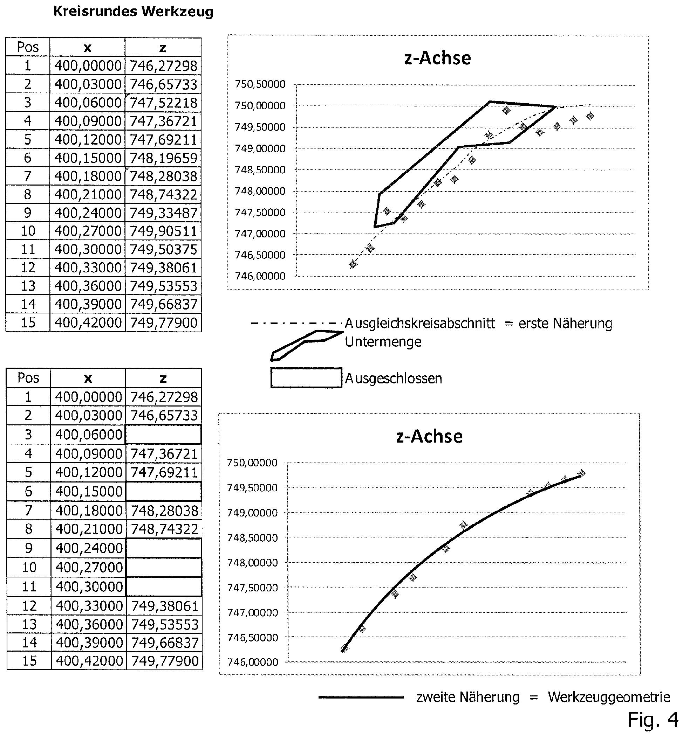

In Fig. 4 ist schematisch veranschaulicht, wie bei einem in der Seitenansicht kreisförmigen Werkzeug vorzugehen ist. Zunächst werden die Abtastorte an dem Werkzeug als auf einem Kreisabschnitt liegend festgelegt. Hierzu werden über einen Bogen von wenigstens etwa 30 Grad entlang der Schneide des Werkzeugs Ortsdaten erfasst. Dazu wird in diesem Beispiel an 15 Messpositionen abgetastet und die Ortsdaten erfasst. Für diese 15 Ortsdaten wird als erste Näherung ein Kreis durch eine erste Kreisregression ermittelt, die einen ersten Werkzeugmittelpunkt und einen ersten Werkzeugradius liefert. Die erste Anzahl Ortsdaten wird dann mit dieser ersten Näherung der Werkzeug-Geometrie verglichen. Um eine zweite, geringere Anzahl Ortsdaten zu erhalten, wird eine Untermenge der ersten Anzahl Ortsdaten abhängig von einem vorgegebenen Kriterium ausgeschlossen Die 5 am weitesten von diesem ersten Näherungskreis liegenden Ortsdaten (in diesem Beispiel Nr. 3, Nr. 6. Nr. 9, Nr. 10, Nr. 11) werden ausgeschlossen. Für die übrigen Ortsdaten wird ein zweiter Näherungskreis ermittelt und als Werkzeug-Geometrie ausgegeben. Das "Ausgeschlossen"-Kriterium kann in einer anderen Variante zum Beispiel sein, dass der Abstand der jeweiligen Ortsdaten mehr als 0,005 mm von dem ermittelten Kreis ist.

Die vorangehend beschriebenen Varianten des Verfahrens und der Vorrichtung zu seiner Durchführung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Die vorstehend erläuterten Erzeugnis- und Verfahrensdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Verfahren zum Vermessen eines in einer Werkstückbearbeitungsmaschine (WSBM) aufgenommenen Werkzeugs (WZG) mit den Schritten:
• Bereitstellen eines berührenden oder berührungslosen Werkzeugabtasters (WATS, WATE) zum Erfassen von Ortsdaten an dem Werkzeug (WZG) und zum Ausgeben für die Ortsdaten repräsentativer Signale (S1, S2, ... Sn),
• Bereitstellen einer Auswerteeinrichtung (ECU) zum Empfangen und Verarbeiten der Signale (S1, S2, ... Sn) und zum Ausgeben einer aus den verarbeiteten Signalen ermittelten Werkzeug-Geometrie;
**dadurch gekennzeichnet, dass** das Verfahren die folgenden Schritte umfasst:
• Erfassen einer Abfolge einer ersten Anzahl Ortsdaten an dem Werkzeug (WZG), wobei das Erfassen der Abfolge der ersten Anzahl Ortsdaten an dem Werkzeug (WZG) Ortsdaten umfasst, deren Abtastorte an dem Werkzeug (WZG) als jeweils um 10 µm bis 1 mm bezogen auf einen vorgegebenen Abtastort an dem Werkzeug (WZG) oder entlang einer Abtastrichtung an dem Werkzeug (WZG) voneinander beabstandet liegend festgelegt werden, und Ausgeben für diese Ortsdaten repräsentativer Signale (S1, S2, ... Sn) an die Auswerteeinrichtung (ECU);
• Verarbeiten der für die erste Anzahl Ortsdaten repräsentativen Signale (S1, S2, ... Sn) um eine erste Näherung der Werkzeug-Geometrie (WZG-N1) zu erhalten;
• Vergleichen der ersten Anzahl Ortsdaten mit dieser ersten Näherung der Werkzeug-Geometrie (WZG-N1) und Ausschließen einer Untermenge der ersten Anzahl Ortsdaten abhängig von einem vorgegebenen Kriterium um eine zweite Anzahl Ortsdaten zu erhalten;
• Verarbeiten der zweiten Anzahl Ortsdaten um eine zweite Näherung der Werkzeug-Geometrie (WZG-N2) zu erhalten; und
• Ausgeben dieser zweiten Näherung der Werkzeug-Geometrie (WZG-N2) als für das Werkzeug (WZG) ermittelte Werkzeug-Geometrie (WG).

2. Verfahren nach Anspruch 1, bei dem vor dem Schritt des Erfassens der Ortsdaten an dem Werkzeug (WZG) die Schritte auszuführen sind:
• Ermitteln einer Werkzeugklasse (WZGK);
• Ermitteln einer zu messenden Kontur, insbesondere einer Werkzeugkontur;
• Festlegen einer für die Werkzeugklasse (WZGK) repräsentativen Kenngröße der Werkzeuggeometrie; und/oder
• Bestimmen einer Abtastortsabfolge an dem Werkzeug (WZG) in Abhängigkeit der ermittelten Werkzeugklasse.

3. Verfahren nach Anspruch 2, bei dem als Werkzeugklasse (WZGK)
(i) ein in der Seitenansicht gerades Werkzeug mit achsparallel verlaufender Werkzeugkontur;
(ii) ein in der Seitenansicht schräges Werkzeug mit nicht achsparallel verlaufender Werkzeugkontur;
(iii) ein in der Seitenansicht kreisförmiges Werkzeug;
(iv) ein in der Seitenansicht ellipsenförmiges Werkzeug;
(v) ein in der Seitenansicht tonnenförmiges Werkzeug; oder
(vi) ein Werkzeug mit in der Seitenansicht beliebiger Werkzeugkontur zu ermitteln ist.

4. Verfahren nach Anspruch 1 oder 2, bei dem das vorgegebene Kriterium zum Ausschließen einer Untermenge
(i) ein Maß einer Abweichung der jeweiligen Ortsdaten von dieser ersten Näherung der Werkzeug-Geometrie (WZG-N1); oder / und
(ii) eine vorgegebene Anzahl am weitesten von dieser ersten Näherung der Werkzeug-Geometrie (WZG-N1) entfernt liegender Ortsdaten ist.

5. Verfahren nach Anspruch 1, bei dem
(i) für ein in der Seitenansicht gerades oder ein in der Seitenansicht schräges Werkzeug (WZG) die Abtastorte an dem Werkzeug (WZG) als auf einem Geradenabschnitt liegend festgelegt werden,
(ii) für ein in der Seitenansicht kreisförmiges, ellipsenförmiges, oder tonnenförmiges
Werkzeug (WZG), die Abtastorte an dem Werkzeug (WZG) als auf einem Kreisabschnitt liegend festgelegt werden, oder
(iii) für ein in der Seitenansicht beliebig geformtes Werkzeug (WZG), die Abtastorte an dem Werkzeug (WZG) anhand einer Beschreibungstabelle mit genauen Sollkoordinaten der Werkzeugkontur festgelegt werden.

6. Verfahren nach einem der vorhergehenden Ansprüche, bei dem, wenn für ein in der Seitenansicht gerades oder ein in der Seitenansicht schräges Werkzeug als Abfolge der ersten Anzahl Ortsdaten an dem Werkzeug (WZG) ein zumindest sägezahnförmiger Verlauf als erste Näherung der Werkzeug-Geometrie (WZG-N1) erhalten wird, von einem Werkzeug-Ursprung (WZGNULL) weiter entfernte Ortsdaten die auszuschließende Untermenge bilden.

7. Verfahren nach einem der vorhergehenden Ansprüche, bei dem
(i) für ein in der Seitenansicht kreisförmiges oder tonnenförmiges Werkzeug (WZG) die erste Näherung der Werkzeug-Geometrie (WZG-N1) durch eine erste Kreisregression ermittelt wird, die einen ersten Werkzeugmittelpunkt und einen ersten Werkzeugradius liefert,
(ii) die erste Anzahl Ortsdaten mit dieser ersten Näherung der Werkzeug-Geometrie (WZG-N1) verglichen wird,
(iii) eine Untermenge der ersten Anzahl Ortsdaten abhängig von einem vorgegebenen Kriterium ausgeschlossen wird, um eine zweite Anzahl Ortsdaten zu erhalten;
(iv) die zweite Anzahl Ortsdaten mittels einer zweiten Kreisregression verarbeitet wird, die einen zweiten Werkzeugmittelpunkt und einen zweiten Werkzeugradius als die zweite Näherung der Werkzeug-Geometrie (WZG-N2) liefert; und
(v) Ausgeben dieser zweiten Näherung der Werkzeug-Geometrie (WZG-N2) als für das in der Seitenansicht kreisförmige oder tonnenförmige Werkzeug (WZG) ermittelte Werkzeug-Geometrie (WG).

8. Verfahren nach einem der vorhergehenden Ansprüche, mit den Schritten:
• Überprüfen, ob die Ortsdaten an dem Werkzeug (WZG) eine einer Werkzeugklasse entsprechende Form des Werkzeugs zumindest innerhalb einer Toleranz wiedergeben; und wenn dies der Fall ist,
• Annähern des gemessenen Konturverlauf an den realen Konturverlauf mittels eines zweistufigen Näherungsverfahrens durch Berechnen einer der Form des Werkzeugs dieser Werkzeugklasse entsprechenden geometrischen Funktion, wobei Ausreißerwerte im Verhältnis zur Gesamtanzahl aller erfassten Ortsdaten an dem Werkzeug (WZG) zumindest teilweise eliminiert werden oder mit einer geringeren Gewichtung in das Ergebnis eingehen, oder der Abstand jedes Einzelmesswertes von einer berechneten Regressionskurve wird bestimmt und bei Überschreitung einer Toleranz als Ausreißerwerte markiert und bei einer nachfolgenden Neuberechnung der Regressionskurve die markierten Ausreißer zur Berechnung nicht mehr verwendet werden.

9. Verfahren nach einem der vorhergehenden Ansprüche, mit den Schritten:
• Verschieben der Messposition bezogen auf eine vorgegebene Messposition;
• mehrfaches Wiederholen des Erfassens der Abfolge der ersten Anzahl Ortsdaten an dem Werkzeug (WZG) an dicht beieinander liegenden Messstellen;
• Ausführen einer Plausibilitätsprüfung nach Mittelwert, Minimalwerten, Regressionskurve um Ausreißerwerte sowohl in positiver Richtung als auch in negativer Richtung zu erkennen und von einer realen Werkzeugkontur zu unterscheiden und bei der Berechnung der Werkzeuggeometrie auszufiltern.

10. Verfahren nach dem vorhergehenden Anspruch, wobei
(i) eine Dimension eines zu untersuchenden Messbereiches,
(ii) eine Anzahl oder eine Dichte von Messpunkten im Messbereich,
(iii) das Mengenverhältnis von Ausreißerwerten zu weiterverwendeten Messwerten,
(iv) ein zulässiges Maß an Abweichungen, und
(v) eine anzuwendende mathematische Filterfunktion
angepasst werden.

11. Messeinrichtung für ein in einer Werkstückbearbeitungsmaschine (WSBM) aufgenommenes Werkzeug (WZG) mit: Einem berührend oder berührungslos messenden Werkzeugabtaster (WATS, WATE) zum Erfassen von Ortsdaten an dem Werkzeug (WZG) und zum Ausgeben für die Ortsdaten repräsentativer Signale (S1, S2, ... Sn), **dadurch gekennzeichnet, dass** der Werkzeugabtaster (WATS, WATE) dazu eingerichtet ist, eine Abfolge einer ersten Anzahl Ortsdaten an dem Werkzeug (WZG) zu erfassen und für diese Ortsdaten repräsentative Signale (S1, S2, ... Sn) an eine Auswerteeinrichtung (ECU) auszugeben, wobei die Auswerteeinrichtung (ECU) dazu eingerichtet ist, beim Erfassen der Abfolge der ersten Anzahl Ortsdaten an dem Werkzeug (WZG) solche Ortsdaten zu erfassen, deren Abtastorte an dem Werkzeug (WZG) als jeweils um 10 µm bis 1 mm bezogen auf einen vorgegebenen Abtastort an dem Werkzeug (WZG) oder entlang einer Abtastrichtung an dem Werkzeug (WZG) voneinander beabstandet liegend festgelegt werden, und wobei die Auswerteeinrichtung (ECU) dazu eingerichtet ist, die Signale (S1, S2, ... Sn) zu empfangen und zu verarbeiten und eine aus den verarbeiteten Signalen ermittelte Werkzeug-Geometrie auszugeben, durch
• Verarbeiten der für die erste Anzahl Ortsdaten repräsentativen Signale (S1, S2, ... Sn), um eine erste Näherung der Werkzeug-Geometrie (WZG-N1) zu erhalten;
• Vergleichen der ersten Anzahl Ortsdaten mit dieser ersten Näherung der Werkzeug-Geometrie (WZG-N1) und Ausschließen einer Untermenge der ersten Anzahl Ortsdaten abhängig von einem vorgegebenen Kriterium, um eine zweite Anzahl Ortsdaten zu erhalten;
• Verarbeiten der zweiten Anzahl Ortsdaten, um eine zweite Näherung der Werkzeug-Geometrie (WZG-N2) zu erhalten; und
• Ausgeben dieser zweiten Näherung der Werkzeug-Geometrie (WZG-N2) als für das Werkzeug (WZG) ermittelte Werkzeug-Geometrie (WG).

12. Messeinrichtung nach Anspruch 11, bei dem die Auswerteeinrichtung (ECU) zu folgendem eingerichtet ist:
• Ermitteln einer Werkzeugklasse (WZGK);
• Ermitteln einer zu messenden Kontur, insbesondere einer Werkzeugkontur;
• Festlegen einer für die Werkzeugklasse (WZGK) repräsentativen Kenngröße der Werkzeuggeometrie; und/oder
• Bestimmen einer Abtastortsabfolge an dem Werkzeug (WZG) in Abhängigkeit der ermittelten Werkzeugklasse.

13. Messeinrichtung nach Anspruch 12, bei dem die Auswerteeinrichtung (ECU) dazu eingerichtet ist, als Werkzeugklasse (WZGK)
(i) ein in der Seitenansicht gerades Werkzeug mit achsparallel verlaufender Werkzeugkontur;
(ii) ein in der Seitenansicht schräges Werkzeug mit nicht achsparallel verlaufender Werkzeugkontur;
(iii) ein in der Seitenansicht kreisförmiges Werkzeug;
(iv) ein in der Seitenansicht ellipsenförmiges Werkzeug;
(v) ein in der Seitenansicht tonnenförmiges Werkzeug; oder
(vi) ein Werkzeug mit in der Seitenansicht beliebiger Werkzeugkontur zu ermitteln.

14. Messeinrichtung nach einem der Ansprüche 11 bis 13, bei dem die Auswerteeinrichtung (ECU) dazu eingerichtet ist, als das vorgegebene Kriterium zum Ausschließen einer Untermenge
(i) ein Maß einer Abweichung der jeweiligen Ortsdaten von dieser ersten Näherung der Werkzeug-Geometrie (WZG-N1); oder / und
(ii) eine vorgegebene Anzahl am weitesten von dieser ersten Näherung der Werkzeug-Geometrie (WZG-N1) entfernt liegender Ortsdaten zu bestimmen.

15. Messeinrichtung nach Anspruch 11, bei dem die Auswerteeinrichtung (ECU) dazu eingerichtet ist,
(i) für ein in der Seitenansicht gerades oder ein in der Seitenansicht schräges Werkzeug (WZG) die Abtastorte an dem Werkzeug (WZG) als auf einem Geradenabschnitt liegend festzulegen,
(ii) für ein in der Seitenansicht kreisförmiges, ellipsenförmiges, oder tonnenförmiges Werkzeug (WZG), die Abtastorte an dem Werkzeug (WZG) als auf einem Kreisabschnitt liegend festzulegen, oder
(iii) für ein in der Seitenansicht beliebig geformtes Werkzeug (WZG), die Abtastorte an dem Werkzeug (WZG) anhand einer Beschreibungstabelle mit genauen Sollkoordinaten der Werkzeugkontur festzulegen, und/oder
bei dem die Auswerteeinrichtung (ECU) dazu eingerichtet ist, wenn für ein in der Seitenansicht gerades oder ein in der Seitenansicht schräges Werkzeug als Abfolge der ersten Anzahl Ortsdaten an dem Werkzeug (WZG) ein zumindest sägezahnförmiger Verlauf als erste Näherung der Werkzeug-Geometrie (WZG-N1) erhalten wird, von einem Werkzeug-Ursprung (WZGNULL) weiter entfernte Ortsdaten als die auszuschließende Untermenge zu nehmen, und/oder bei dem die Auswerteeinrichtung (ECU) dazu eingerichtet ist, für ein kreisförmiges, oder tonnenförmiges Werkzeug (WZG) die erste Näherung der Werkzeug-Geometrie (WZG-N1) durch eine erste Kreisregression ermittelt wird, die einen ersten Werkzeugmittelpunkt und einen ersten Werkzeugradius liefert.

## Claims

1. Method for measuring a tool (WZG) received in a workpiece processing machine (WSBM) having the steps:
• providing a contact or noncontact tool sensing device (WATS, WATE) for detecting positional data on the tool (WZG) and for outputting signals (S1, S2, ... Sn) representative of the positional data,
• providing an evaluation device (ECU) for receiving and processing the signals (S1, S2, ... Sn) and for outputting a tool geometry determined from the processed signals;
**characterised in that** the method comprises the following steps:
• detecting a sequence of a first number of positional data on the tool (WZG), wherein the detecting of the sequence of the first number of positional data on the tool (WZG) comprises positional data, the sensing positions of which on the tool (WZG) are specified to lie spaced apart from one another each by 10 µm to 1 mm based on a predetermined sensing position on the tool (WZG) or along a sensing direction on the tool (WZG), and outputting signals (S1, S2, ... Sn) representative of said positional data to the evaluation device (ECU);
• processing the signals (S1, S2, ... Sn) representative of the first number of positional data in order to obtain a first approximation of the tool geometry (WZG-N1);
• comparing the first number of positional data with said first approximation of the tool geometry (WZG-N1) and excluding a subset of the first number of positional data depending on a predetermined criterion, in order to obtain a second number of positional data;
• processing the second number of positional data in order to obtain a second approximation of the tool geometry (WZG-N2); and
• outputting said second approximation of the tool geometry (WZG-N2) as the tool geometry (WG) determined for the tool (WZG).

2. Method according to claim 1, in which, before the step of detecting the positional data on the tool (WZG), the steps to be carried out are:
• determining a tool class (WZGK);
• determining a contour to be measured, in particular a tool contour;
• specifying a characteristic quantity of the tool geometry representative of the tool class (WZGK); and/or
• determining a sequence of sensing positions on the tool (WZG) depending on the determined tool class.

3. Method according to Claim 2, in which there is to be determined, as the tool class (WZGK),
(i) a tool straight in side view and having a tool contour running parallel to the axis;
(ii) a tool oblique in side view and having a tool contour not running parallel to the axis;
(iii) a tool circular in side view;
(iv) a tool elliptical in side view;
(v) a tool barrel-shaped in side view; or
(vi) a tool having any tool contour in side view.

4. Method according to claim 1 or 2, in which the predetermined criterion for excluding a subset is
(i) a measure of a deviation of the respective positional data from said first approximation of the tool geometry (WZG-N1); or / and
(ii) a predetermined number of positional data lying farthest away from said first approximation of the tool geometry (WZG-N1).

5. Method according to claim 1, in which
(i) for a tool (WZG) straight in side view or a tool (WZG) oblique in side view, the sensing positions on the tool (WZG) are specified as lying on a straight-line segment,
(ii) for a tool (WZG) circular, elliptical, or barrel-shaped in side view, the sensing positions on the tool (WZG) are specified as lying on a circular segment, or
(iii) for a tool (WZG) of any shape in side view, the sensing positions on the tool (WZG) are specified with the aid of a description table with precise desired coordinates of the tool contour.

6. Method according to one of the preceding claims, in which, if for a tool straight in side view or a tool oblique in side view, as the sequence of the first number of positional data on the tool (WZG), an at least approximately saw-tooth-shaped course is obtained as the first approximation of the tool geometry (WZG-N1), positional data farther away from a tool origin (WZGNULL) form the subset to be excluded.

7. Method according to one of the preceding claims, in which
(i) for a tool (WZG) circular or barrel-shaped in side view, the first approximation of the tool geometry (WZG-N1) is determined by a first circular regression which yields a first tool centre point and a first tool radius,
(ii) the first number of positional data is compared with this first approximation of the tool geometry (WZG-N1),
(iii) a subset of the first number of positional data is excluded depending on a predetermined criterion, in order to obtain a second number of positional data;
(iv) the second number of positional data is processed by means of a second circular regression which yields a second tool centre point and a second tool radius as the second approximation of the tool geometry (WZG-N2); and
(v) outputting said second approximation of the tool geometry (WZG-N2) as the tool geometry (WG) determined for the tool (WZG) circular or barrel-shaped in side view.

8. Method according to one of the preceding claims, having the steps:
• checking whether the positional data on the tool (WZG) at least within a tolerance reproduces a shape of the tool corresponding to a tool class; and if this is the case,
• approximating the measured contour course to the real contour course by means of a two-stage approximation method by calculating a geometrical function corresponding to the shape of the tool of this tool class, where outlier values in relation to the total number of all the detected positional data on the tool (WZG) are at least partially eliminated or are included in the result with a lower weighting, or the distance of each individual measured value from a calculated regression curve is determined and on exceeding a tolerance is marked as outlier values and on a subsequent recalculation of the regression curve the marked outliers are no longer used for the calculation.

9. Method according to one of the preceding claims, having the steps:
• displacing the measuring position relative to a predetermined measuring position;
• multiple repeating of the detecting of the sequence of the first number of positional data on the tool (WZG) at measuring positions lying close to one another;
• carrying out a plausibility check for mean value, minimum values, regression curve in order to detect outlier values both in the positive direction and in the negative direction and to distinguish them from a real tool contour and to filter them out on the calculation of the tool geometry.

10. Method according to the preceding claim, wherein
(i) a dimension of a measuring range to be examined,
(ii) a number or a density of measuring points in the measuring range,
(iii) the quantitative proportion of outlier values to further-used measured values,
(iv) a permissible measure of deviations, and
(v) a mathematical filter function to be applied
are adjusted.

11. Measuring device for a tool (WZG) received in a workpiece processing machine (WSBM) having: a contact- or noncontact-measuring tool sensing device (WATS, WATE) for detecting positional data on the tool (WZG) and for outputting signals (S1, S2, ... Sn) representative of the positional data, **characterised in that** the tool sensing device (WATS, WATE) is adapted to detect a sequence of a first number of positional data on the tool (WZG) and to output signals (S1, S2, ... Sn) representative of said positional data to an evaluation device (ECU), wherein the evaluation device (ECU) is adapted, on the detecting of the sequence of the first number of positional data on the tool (WZG), to detect those positional data, the sensing positions of which on the tool (WZG) are specified to lie spaced apart from one another each by 10 µm to 1 mm based on a predetermined sensing position on the tool (WZG) or along a sensing direction on the tool (WZG), and wherein the evaluation device (ECU) is adapted to receive and to process the signals (S1, S2, ... Sn) and to output a tool geometry determined from the processed signals, by
• processing the signals (S1, S2, ... Sn) representative of the first number of positional data in order to obtain a first approximation of the tool geometry (WZG-N1);
• comparing the first number of positional data with said first approximation of the tool geometry (WZG-N1) and excluding a subset of the first number of positional data depending on a predetermined criterion, in order to obtain a second number of positional data;
• processing the second number of positional data in order to obtain a second approximation of the tool geometry (WZG-N2); and
• outputting said second approximation of the tool geometry (WZG-N2) as the tool geometry (WG) determined for the tool (WZG).

12. Measuring device according to claim 11, in which the evaluation device (ECU) is adapted to the following:
• determine a tool class (WZGK);
• determine a contour to be measured, in particular a tool contour;
• specify a characteristic quantity of the tool geometry representative of the tool class (WZGK); and/or
• determine a sequence of sensing positions on the tool (WZG) depending on the determined tool class.

13. Measuring device according to claim 12, in which the evaluation device (ECU) is adapted to determine, as the tool class (WZGK),
(i) a tool straight in side view and having a tool contour running parallel to the axis;
(ii) a tool oblique in side view and having a tool contour not running parallel to the axis;
(iii) a tool circular in side view;
(iv) a tool elliptical in side view;
(v) a tool barrel-shaped in side view; or
(vi) a tool having any tool contour in side view.

14. Measuring device according to one of Claims 11 to 13, in which the evaluation device (ECU) is adapted to determine, as the predetermined criterion for excluding a subset,
(i) a measure of a deviation of the respective positional data from said first approximation of the tool geometry (WZG-N1); or / and
(ii) a predetermined number of positional data lying farthest away from said first approximation of the tool geometry (WZG-N1).

15. Measuring device according to claim 11, in which the evaluation device (ECU) is adapted,
(i) for a tool (WZG) straight in side view or a tool (WZG) oblique in side view, to specify the sensing positions on the tool (WZG) as lying on a straight-line segment,
(ii) for a tool (WZG) circular, elliptical, or barrel-shaped in side view, to specify the sensing positions on the tool (WZG) as lying on a circular segment, or
(iii) for a tool (WZG) of any shape in side view, to specify the sensing positions on the tool (WZG) with the aid of a description table with precise desired coordinates of the tool contour, and/or
in which the evaluation device (ECU) is adapted, if for a tool straight in side view or a tool oblique in side view, as the sequence of the first number of positional data on the tool (WZG), an at least approximately saw-tooth-shaped course is obtained as the first approximation of the tool geometry (WZG-N1), to take positional data farther away from a tool origin (WZGNULL) as the subset to be excluded, and/or
in which the evaluation device (ECU) is adapted, for a circular, or barrel-shaped tool (WZG), the first approximation of the tool geometry (WZG-N1) is determined by a first circular regression which yields a first tool centre point and a first tool radius.

## Revendications

1. Procédé de mesurage d'un outil (WZG) monté dans une machine d'usinage de pièces (WSBM), comprenant les étapes suivantes :
- la mise en place d'un palpeur d'outil (WATS, WATE) avec ou sans contact servant à acquérir des données de position sur l'outil (WZG) et à émettre des signaux (S1, S2, ... Sn) représentatifs des données de position,
- la mise en place d'un système de traitement (ECU) servant à recevoir et à traiter les signaux ainsi qu'à délivrer une géométrie d'outil déterminée à partir des signaux traités ;
**caractérisé en ce que** le procédé comporte les étapes suivantes :
- l'acquisition d'une séquence constituée d'un premier nombre de données de position sur l'outil (WZG), l'acquisition de ladite séquence constituée d'un premier nombre de données de position sur l'outil (WZG) comportant des données de position dont les points de palpage/balayage sur l'outil (WZG) sont définis comme étant respectivement situés espacés les uns des autres de 10 µm à 1 mm par rapport à un point de palpage/balayage prédéfini sur l'outil (WZG) ou le long d'une direction de palpage/balayage sur l'outil (WZG), et la délivrance au système de traitement (ECU) de signaux (S1, S2, ... Sn) de sortie représentatifs desdits points de palpage/balayage ;
- le traitement des signaux (S1, S2, ... Sn) représentatifs du premier nombre de données de position afin d'obtenir une première itération de la géométrie d'outil (WZG-N1) ;
- la comparaison du premier nombre de données de position à ladite première itération de la géométrie d'outil (WZG-N1) et l'exclusion d'un sous-ensemble du premier nombre de données de position en fonction d'un critère prédéfini afin d'obtenir un second nombre de données de position ;
- le traitement du second nombre de données de position afin d'obtenir une seconde itération de la géométrie d'outil (WZG-N2) ; et
- et la délivrance de cette seconde itération de la géométrie d'outil (WZG-N2) en tant que géométrie d'outil (WG) déterminée pour cet outil (WZG).

2. Procédé selon la revendication 1, dans le cadre duquel l'étape de l'acquisition des données de position sur l'outil (WZG) doit être précédée des étapes suivantes :
- la détermination d'une classe d'outil (WZGK) ;
- la détermination d'un contour à mesurer, plus particulièrement d'un contour d'outil ;
- la détermination d'une grandeur caractéristique de la géométrie d'outil (WZGK) représentative de la classe d'outil (WZGK) ; et/ou
- la détermination d'une séquence de points de palpage/balayage sur l'outil (WZG) en fonction de la classe d'outil déterminée.

3. Procédé selon la revendication 2, dans le cadre duquel la détermination de la classe d'outil (WZGK) consiste à déterminer :
(i) vu de côté, un outil droit avec un contour s'étendant parallèlement à l'axe ;
(ii) vu de côté, un outil oblique avec un contour s'étendant non parallèlement à l'axe ;
(iii) vu de côté, un outil circulaire ;
(iv) vu de côté, un outil elliptique ;
(v) vu de côté, un outil en forme de tonneau, ou
(vi) vu de côté, un outil avec un quelconque contour.

4. Procédé selon la revendication 1 ou 2, dans le cadre duquel le critère prédéfini pour exclure un sous-ensemble
(i) consiste en une cote exprimant un écart entre les données de position respectives et ladite première itération de la géométrie d'outil (WZG-N1) ; ou/et
(ii) en un nombre prédéfini de données de position se trouvant être les plus éloignées de cette première itération de la géométrie d'outil (WZG-N1).

5. Procédé selon la revendication 1, dans le cadre duquel
(i) les points de palpage/balayage sur l'outil (WZG) sont, pour un outil (WZG) droit vu de côté ou pour un outil (WZG) oblique vu de côté, déterminés comme étant situés sur un segment droit,
(ii) les points de palpage/balayage sur l'outil (WZG) sont, pour un outil (WZG) circulaire vu de côté, pour un outil (WZG) elliptique vu de côté ou pour un outil (WZG) en forme de tonneau vu de côté, déterminés comme étant situés sur un segment de cercle, ou
(iii) les points de palpage/balayage sur l'outil (WZG) sont, pour un outil (WZG) de forme quelconque vu de côté, déterminés à partir d'un tableau descriptif dans lequel sont enregistrées des coordonnées de contour d'outil théoriques exactes.

6. Procédé selon l'une des revendications précédentes, dans le cadre duquel le sous-ensemble à exclure est formé par des données de position plus éloignées d'un point d'origine d'outil (WZGNULL) lorsque, pour un outil droit vu de côté ou pour un outil oblique vu de côté, il est obtenu comme séquence du premier nombre de données de position au moins un tracé en dents de scie comme première itération de la géométrie d'outil (WZG-N1).

7. Procédé selon l'une des revendications précédentes, dans le cadre duquel
(i) pour un outil (WZG) circulaire vu de côté ou en forme de tonneau vu de côté, la première itération de la géométrie d'outil (WZG-N1) est déterminée par une première régression circulaire qui fournit un premier centre d'outil et un premier rayon d'outil,
(ii) le premier nombre de données de position est comparé à cette première itération de la géométrie d'outil (WZG-N1),
(iii) un sous-ensemble du premier nombre de données de positions est exclu en fonction d'un critère prédéfini afin d'obtenir un second nombre de données de position ;
(iv) le second nombre de données de position est traité au moyen d'une seconde régression circulaire qui fournit un second centre d'outil et un second rayon d'outil en tant que seconde itération de la géométrie d'outil (WZG-N2) ; et
(v) la seconde itération de la géométrie d'outil (WZG-N2) est délivrée en tant que géométrie d'outil (WG) déterminée pour l'outil (WZG) circulaire ou en forme de tonneau vu de côté.

8. Procédé selon l'une des revendications précédentes, comprenant les étapes suivantes :
- vérifier si les données de position sur l'outil (WZG) restituent au moins à l'intérieur d'une plage de tolérances une forme correspondant à une classe d'outil ; et, dans l'affirmative,
- faire se rapprocher le tracé du contour mesuré du tracé du contour réel au moyen d'un procédé itératif en deux étapes par calcul d'une fonction géométrique correspondant à la forme de l'outil de la classe d'outil déterminée, les valeurs aberrantes par rapport au nombre global de toutes les données de position sur l'outil acquises étant éliminées au moins partiellement ou influençant le résultat moyennant une plus faible pondération, ou l'écart entre chaque valeur individuelle mesurée et une courbe de régression calculée étant déterminé et, en cas de dépassement de la tolérance, repéré comme valeurs aberrantes, et les valeurs aberrantes repérées n'étant plus réutilisées lors d'un nouveau calcul ultérieur.

9. Procédé selon l'une des revendications précédentes, comprenant les étapes suivantes :
- le décalage de la position de mesure par rapport à une position de mesure prédéfinie ;
- l'acquisition à répétition de la séquence du premier nombre des données de position sur l'outil (WZG) en des points de mesure très rapprochés les uns des autres ;
- la mise en oeuvre d'un contrôle de plausibilité de la valeur moyenne, des valeurs minimums, de la courbe de régression afin de reconnaître des valeurs aberrantes aussi bien dans la direction positive que dans la direction négative et de les distinguer d'un contour d'outil réel et afin de les éliminer par filtrage lors du calcul de la géométrie d'outil.

10. Procédé selon la revendication précédente,
(i) une dimension d'une plage de mesure à examiner,
(ii) un nombre ou une densité de points de mesure dans les limites de la plage de mesure,
(iii) un rapport qualitatif entre valeurs aberrantes et valeurs de mesure réutilisées,
(iv) une cote d'écarts autorisée, et
(v) une fonction de filtre mathématique à appliquer
faisant chacun l'objet d'une adaptation.

11. Dispositif de mesure d'un outil (WZG) monté dans une machine d'usinage de pièces (WSBM), comprenant : un palpeur d'outil (WATS, WATE) avec ou sans contact servant à acquérir des données de position sur l'outil (WZG) et à émettre des signaux (S1, S2, ... Sn) représentatifs des données de position, **caractérisé en ce que** le palpeur d'outil (WATS, WATE) est conçu pour acquérir une séquence constituée d'un premier nombre de données de position sur l'outil (WZG) et pour délivrer au système de traitement (ECU) des signaux (S1, S2, ... Sn) représentatifs de ces données de position, le système de traitement (ECU) étant conçu pour acquérir, lors de l'acquisition de la séquence du premier nombre de données de position sur l'outil (WZG), les données de position dont les points de palpage/balayage sur l'outil (WZG) sont définis comme étant respectivement situés espacés les uns des autres de 10 µm à 1 mm par rapport à un point de palpage/balayage prédéfini sur l'outil (WZG) ou le long d'une direction de palpage/balayage sur l'outil (WZG), et le système de traitement (ECU) étant conçu pour recevoir et traiter les signaux (S1, S2, ... Sn) et pour délivrer une géométrie d'outil déterminée à partir des signaux traités
- par le traitement des signaux (S1, S2, ... Sn) représentatifs du premier nombre de données de position afin d'obtenir une première itération de la géométrie d'outil (WZG-N1) ;
- par la comparaison du premier nombre de données de position à cette première itération de la géométrie d'outil (WZG-N1) et par exclusion d'un sous-ensemble du premier nombre de données de position en fonction d'un critère prédéfini afin d'obtenir un second nombre de données de position
- par le traitement du second nombre de données de position afin d'obtenir une seconde itération de la géométrie d'outil (WZG-N2) ; et
- par l'obtention de cette seconde itération de la géométrie d'outil (WZG-N2) en tant que géométrie d'outil (WG) déterminée pour cet outil (WZG).

12. Dispositif de mesure selon la revendication 11, dans le cadre duquel le système de traitement (ECU) est conçu :
- pour déterminer une classe d'outil (WZGK) ;
- pour déterminer un contour à mesurer, plus particulièrement un contour d'outil ;
- pour déterminer une grandeur caractéristique de la géométrie d'outil (WZGK) représentative de la classe d'outil (WZGK) ; et/ou
- pour déterminer une séquence de points de palpage/balayage sur l'outil (WZG) en fonction de la classe d'outil déterminée.

13. Dispositif de mesurage selon la revendication 12, dans le cadre duquel sont à déterminer :
(i) vu de côté, un outil droit avec un contour s'étendant parallèlement à l'axe ;
(ii) vu de côté, un outil oblique avec un contour s'étendant non parallèlement à l'axe ;
(iii) vu de côté, un outil circulaire ;
(iv) vu de côté, un outil elliptique ;
(v) vu de côté, un outil en forme de tonneau, ou
(vi) vu de côté, un outil avec un quelconque contour.

14. Dispositif de mesurage selon l'une des revendications 11 à 13, dans le cadre duquel le système de traitement (ECU) est conçu pour déterminer
(i) une cote d'écart entre les données de position respectives et la première itération de la géométrie d'outil (WZG-N1) ; ou / et
(ii) un nombre prédéfini de données de position qui sont les plus éloignées de la première itération de la géométrie d'outil (WZG-N1)
en tant que critère prédéfini afin d'exclure un sous-ensemble.

15. Dispositif de mesurage selon la revendication, dans le cadre duquel le système de traitement (ECU) est conçu pour déterminer,
(i) pour un outil (WZG) droit vu de côté ou pour un outil (WZG) oblique vu de côté, les points de palpage/balayage sur l'outil (WZG) comme étant situés sur un segment droit,
(ii) pour un outil (WZG) elliptique vu de côté ou pour un outil (WZG) en forme de tonneau vu de côté, les points de palpage/balayage sur l'outil (WZG) comme étant situés sur un segment de cercle, ou
(iii) pour un outil (WZG) de forme quelconque vu de côté, les points de pal-page/balayage sur l'outil (WZG) à partir d'un tableau descriptif dans lequel sont enregistrées des coordonnées de contour d'outil théoriques exactes, et/ou dans le cadre duquel le système de traitement (ECU) est conçu pour prendre comme sous-ensemble à exclure des données de position les plus éloignées du point d'outil d'origine d'outil (WZGNULL) lorsque, pour un outil droit vu de côté ou pour un outil oblique vu de côté, il est obtenu comme séquence du premier nombre de données de position au moins un tracé en dents de scie comme première itération de la géométrie d'outil (WZG-N1), et/ou
dans le cadre duquel le système de traitement (ECU) est conçu pour déterminer, pour un outil (WZG) circulaire ou en forme de tonneau vu de côté, la première itération de la géométrie d'outil (WZG-N1) au moyen d'une première régression de cercle qui fournit un premier centre d'outil et un premier rayon d'outil.
